# EUROPÄISCHE PATENTSCHRIFT

(11) **EP 4 264 195 B1**
(45) Veröffentlichungstag und Bekanntmachung des Hinweises auf die Patenterteilung: **11.06.2025**
(21) Anmeldenummer: 21823793.1
(22) Anmeldetag: 26.11.2021
(51) Int. Cl.: G01F 1/58

(54) **MESSGERÄT UND VERFAHREN ZUM BESTIMMEN EINER ABRASION**
MEASURING DEVICE AND METHOD FOR DETERMINING AN ABRASION
DISPOSITIF DE MESURE ET PROCÉDÉ DE DÉTERMINATION D'UNE ABRASION

(30) Priorität: 15.12.2020 DE 102020133612
(43) Veröffentlichungstag der Anmeldung: 25.10.2023
(73) Patentinhaber: Endress+Hauser Flowtec AG, 4153 Reinach (CH)
(72) Erfinder: SULZER, Thomas, 4058 Basel (CH); TSCHAMBSER, Florent, 68220 Hesingue (FR); WOHLGEMUTH, Werner, 4206 Seewen (CH); DREHER, Lars, 79282 Ballrechten Dottingen (DE)
(74) Vertreter: Endress + Hauser Group Services (Deutschland) AG+Co. KG
(86) Internationale Anmeldenummer: PCT/EP2021/083205
(87) Internationale Veröffentlichungsnummer: WO 2022/128414

(56) Entgegenhaltungen:
- EP-A1- 2 124 034
- EP-A2- 3 460 451
- GB-A- 2 501 184
- JP-A- 2006 250 692
- US-A- 4 338 097
- US-A1- 2010 326 654
- US-A1- 2015 240 627
- US-B1- 6 946 855
- US-B2- 9 228 867
- US-B2- 9 410 830

## Beschreibung

Die Erfindung betrifft ein Messgerät, eine verfahrenstechnische Anlage und ein Verfahren zum Bestimmen einer Abrasion.

Aus der Prozessautomatisierung sind Messgeräte bekannt, die dazu eingesetzt werden um Prozesseigenschaften des Mediums zu überwachen. Übliche Prozesseigenschaften sind beispielsweise Durchflussvolumen und -geschwindigkeit, Massedurchfluss, pH-Wert, Druck und Temperatur des Mediums. Ein Beispiel für ein häufig eigesetztes Messgerät ist ein magnetisch-induktives Durchflussmessgerät. Anwendungsbedingt kann das Medium für das Messrohr abrasive Eigenschaften aufweisen. Um eine möglich lange Einsatzzeit des Messgerätes zu gewähren sind spezielle Gehäuse, Messrohrkörper oder Auskleidungen für das Messrohr vorgesehen. Bei der Verwendung von Auskleidungen kann bei erhöhter Abrasion ein Austausch vom Anwender vorgesehen werden. Es kann vorteilhaft sein den Zeitpunkt vorherzubestimmen, bei dem ein Austausch der Auskleidung notwendig ist, ohne den Prozess zu unterbrechen.

Magnetisch-induktive Durchflussmessgeräte werden zur Bestimmung der Durchflussgeschwindigkeit und des Volumendurchflusses eines fließenden Mediums in einer Rohrleitung eingesetzt. Ein magnetisch-induktives Durchflussmessgerät weist ein Magnetsystem auf, welches ein Magnetfeld senkrecht zur Flussrichtung des fließenden Mediums erzeugt. Dafür werden üblicherweise einzelne Spulen, seltener Permanentmagnete verwendet. Um ein überwiegend homogenes Magnetfeld zu realisieren, werden zusätzlich Polschuhe so geformt und an dem Messrohr angebracht, dass die Magnetfeldlinien über den gesamten Rohrquerschnitt im Wesentlichen senkrecht zur Querachse bzw. parallel zur Vertikalachse des Messrohres verlaufen. Ein an die Mantelfläche des Messrohres angebrachtes Messelektrodenpaar greift eine senkrecht zur Flussrichtung und zum Magnetfeld anliegende elektrische Messspannung bzw. Potentialdifferenz im Medium ab, die entsteht, wenn ein leitfähiges Medium bei angelegtem Magnetfeld in Flussrichtung fließt. Da die abgegriffene Messspannung laut Faraday'schem Induktionsgesetz von der Geschwindigkeit des fließenden Mediums abhängt, kann aus der induzierten Messspannung *U* die Durchflussgeschwindigkeit *u* und, mit Hinzunahme eines bekannten Rohrquerschnitts, der Volumendurchfluss *V̇* ermittelt werden.

Magnetisch-induktive Durchflussmessgeräte finden vielfach Anwendung in der Prozess- und Automatisierungstechnik für Fluide ab einer elektrischen Leitfähigkeit von etwa 5 µS/cm. Entsprechende Durchflussmessgeräte werden von der Anmelderin in unterschiedlichsten Ausführungsformen für verschiedene Anwendungsbereiche beispielsweise unter der Bezeichnung PROMAG vertrieben.

Aufgrund der geforderten hohen mechanischen Stabilität für Messrohre von magnetisch-induktiven Durchflussmessgeräten, bestehen diese zumeist aus einem metallischen Trägerrohr von vorgebbarer Festigkeit und Weite, welches innen mit einem elektrisch isolierenden Material von vorgebbarer Dicke, dem so genannten Liner, ausgekleidet ist. Beispielsweise sind in der DE 10 2005 044 972 A1 und in der DE 10 2004 062 680 A1 jeweils magnetisch-induktive Messaufnehmer beschrieben, die ein in eine Rohrleitung einfügbares, ein einlassseitiges erstes Ende und ein auslassseitiges zweites Ende aufweisendes Messrohr mit einem nicht-ferromagnetischen Trägerrohr als eine äußere Umhüllung des Messrohrs, und einer in einem Lumen des Trägerrohrs untergebrachten, aus einem elektrisch isolierenden Material bestehenden rohrförmigen Auskleidung zum Führen eines strömenden und vom Trägerrohr elektrisch isolierten Messstoffs umfassen.

Die üblicherweise aus einem thermoplastischen, duroplastischen und/oder elastomeren Kunststoff bestehende Auskleidung dient unter anderem der chemischen Isolation des Trägerrohrs vom Messstoff. Bei magnetisch-induktiven Messaufnehmern, bei denen das Trägerrohr eine hohe elektrische Leitfähigkeit aufweist, beispielsweise bei Verwendung metallischer Trägerrohr, dient die Auskleidung außerdem zur elektrischen Isolation zwischen dem Trägerrohr und dem Messstoff, die ein Kurzschließen der im Messstoff induzierten Spannung über das Trägerrohr verhindert. Durch eine entsprechende Auslegung des Trägerrohrs ist insoweit also eine Anpassung der Festigkeit des Messrohrs an die im jeweiligen Einsatzfall vorliegenden mechanischen Beanspruchungen realisierbar, während mittels der Auskleidung eine Anpassung des Messrohrs an die für den jeweiligen Einsatzfall geltenden elektrischen, chemischen und/oder biologischen Anforderungen realisierbar ist.

Häufig wird zur Befestigung der Auskleidung auch ein sogenannter Stützkörper verwendet, der in die Auskleidung eingebettet ist. In der Patentschrift EP 0 766 069 B1 bspw. dient ein mit dem Trägerrohr verschweißtes Lochblechrohr als Stützkörper. Der Stützkörper wird mit dem Trägerrohr verbunden und in die Auskleidung eingebettet, indem das Material, aus welchem die Auskleidung besteht inwendig in das Trägerrohr aufgetragen wird. Weiterhin ist zur mechanischen Stabilisierung und zur elektrischen Abschirmung aus der Patentschrift US 4,513,624 A ein Messrohr mit einem Metallgehäuse bekannt geworden. Eigens zu diesem Zweck umgibt das Metallgehäuse dabei eine das Medium führende Rohrleitung.

Weiterhin sind magnetisch-induktive Durchflussmessgeräte bekannt, welche ein aus einem elektrisch isolierenden Material - bspw. Kunststoff, Keramik und/oder Glas - gebildeten Messrohrkörper aufweisen. Bei derartigen Messrohren wird auf eine isolierende Beschichtung verzichtet.

Es hat sich gezeigt, dass die elektrisch isolierende Auskleidung, aber auch der aus einem elektrisch isolierenden Material gebildete Messrohrkörper trotz der Verwendung von strapazierfähigen Materialien einer Erosion unterliegt. Insbesondere Messstoffe die feste Partikel - wie z.B. Sand, Kies und/oder Gestein - mit sich führen, verursachen eine Abrasion der Auskleidung der Rohrleitung bzw. des Messrohrkörpers. Infolge der Abrasion bzw. Deformation der Auskleidung oder des elektrisch isolierenden Messrohrkörpers verändert sich das Durchflussprofil des Messaufnehmers. Aufgrund dessen liefert die Messeinrichtung fehlerhafte Messwerte des Volumen- oder Massedurchflusses. Zudem geht bei Messrohren mit innenseitiger Auskleidung die chemische bzw. elektrische Isolation zwischen Messstoff und Trägerrohr verloren.

Die US 6 946 855 B1 offenbart eine Vorrichtung zur Überwachung der Auswirkung auf ein Material, das einem Fluid ausgesetzt. Die Vorrichtung enthält ein Sensorelement, das dem Fluid ausgesetzt ist und als ein Ring aus dem Material ausgebildet ist, der koaxial in dem Rohrabschnitt angebracht, aber elektrisch von diesem isoliert ist. Änderungen des elektrischen Widerstands des Sensorelements lassen sich somit überwachen. Weiterhin weist die Vorrichtung auch ein Referenzelement auf, welches von dem Rohr elektrisch isoliert, mit dem Sensorelement elektrisch in Reihe geschaltet und vor dem Kontakt mit der Flüssigkeit geschützt ist. Die Elemente können beide aus dem gleichen Material wie das Rohr bestehen und unterliegen, da sie in diesem enthalten sind, den gleichen Temperatur- und Druckschwankungen wie das Rohr. Auf diese Weise zeigt eine Änderung des Widerstands des Sensorelements, die durch Korrosion bzw. Erosion durch das Fluid verursacht wird, genau den Grad der Korrosion bzw. Erosion des Rohrs an, welches das Fluid führt.

Die WO 2010/066518 A1 offenbart eine Messeinrichtung zur Bestimmung eines Volumen- und/oder Massedurchflusses eines durch ein Messrohr strömenden Messstoffes. Das Messrohr umfasst ein Trägerrohr mit einer inwendigen Auskleidung, umfassend eine erste Schicht und eine zweite Schicht, und eine Überwachungselektrode, die zwischen der ersten Schicht und der zweiten Schicht eingebettet ist und dazu eingerichtet ist eine Beschädigung der zweiten/ersten Schicht zu detektieren. Nachteilig daran ist jedoch, die Beeinflussung der Überwachung auf die Messung des Volumen- und/oder Massedurchflusses.

Der Erfindung liegt die Aufgabe zugrunde ein alternatives Messgerät und Verfahren zur Ermittlung einer Abrasion bereitzustellen, welche dem Problem Abhilfe schafft.

Die Aufgabe wird gelöst durch das Messgerät nach Anspruch 1 und das Verfahren nach Anspruch 13.

Das erfindungsgemäße Messgerät umfasst:
- ein Messrohr zum Führen eines fließfähigen Mediums,
   wobei das Messrohr eine innere Mantelfläche aufweist,
   wobei die innere Mantelfläche zumindest abschnittsweise elektrisch isolierend ausgebildet ist,
- mindestens eine Überwachungselektrode,
   wobei die mindestens eine Überwachungselektrode an dem elektrisch isolierenden Abschnitt der inneren Mantelfläche mediumsberührend angeordnet ist;
- eine Abrasionsdetektionsvorrichtung, welche dazu eingerichtet ist, an der mindestens einen Überwachungselektrode mindestens eine Größe zu ermitteln, welche mit einer Abrasion der Überwachungselektrode korrespondiert.

Bekannte Überwachungselektroden sind im Liner eingebettete metallische Folien oder Stiftelektroden, an denen eine Messschaltung der Abrasionsdetektionsvorrichtung einen elektrischen Widerstand gegen eine mediumsberührende Referenzelektrode messen. Erfindungsgemäß ist die Überwachungselektrode mediusmberührend und somit direkt dem abrasiven Medium ausgesetzt.

Als Abrasionsdetektionsvorrichtung ist eine Vorrichtung zu verstehen, die dazu ausgebildet ist, Werte der zu ermittelnden Größe (z.B. elektrischer Widerstand, Strom, Spannung, oder davon abhängige Größen) an der Überwachungselektrode zu bestimmen bzw. zu messen. Dies kann kontaktlos oder berührend erfolgen.

Erfindungsgemäß umfasst das Schichtsystem mindestens zwei, jeweils unterschiedliche Materialien aufweisende elektrisch leitfähige Schichten.

Als Schichtmaterialien werden vorzugsweise Edelstähle, CrNi-Legierungen, ZnAl-Legierungen, Platin oder Titan verwendet. Für eine Vielzahl an Anwendungen bieten sich die rostfreien Edelstähle 1.4435 und 1.4462 an. Der Einsatz von mindestens zwei Schichten mit unterschiedlichen Materialien hat den Vorteil, dass sich anhand der ermittelten Größe Abrasionsraten für unterschiedliche Materialien ableiten lassen. Demnach ist die Abrasionsdetektionsvorrichtung dazu eingerichtet, eine erste Abrasionsrate für die erste Schicht und eine zweite Abrasionsrate für die zweite Schicht zu bestimmen. Dabei wird die zweite Abrasionsrate erst ermittelt, wenn die erste Schicht abgetragen ist und die Werte der ermittelten Größe von einem Sollwertebereich abweichen.

Vorteilhafte Ausgestaltung der Erfindung sind Gegenstand der Unteransprüche.

Erfindungsgemäß ist die mindestens eine Überwachungselektrode als ein selektiv appliziertes zumindest teilweise leitfähiges Schichtsystem ausgebildet,
wobei, nach eine Ausgestaltung, das Schichtsystem mindestens eine leitfähige Polymerschicht und/oder mindestens eine Metallschicht und/oder mindestens eine dotierte Halbleiterschicht umfasst.

Das Schichtsystem ist vorzugsweise als ein Dünnfilme ausgebildet und kann Schichtdicken von mehreren Nanometern bis hin zu wenigen Millimetern aufweisen.

Derartig dünne Schichtsysteme haben den Vorteil, dass sich ihre mittels Abrasionsdetektionsvorrichtung ermittelte Größe, insbesondere der elektrische Widerstand ausgesprochen von der Schichtdickenänderung und somit auch indirekt von der Abrasion durch das Medium abhängt.

Eine Ausgestaltung sieht vor, dass die mindestens zwei Schichten jeweils einen elektrischen Widerstand aufweisen,
wobei die mindestens zwei Schichten derart angeordnet sind, dass die jeweiligen elektrischen Widerstände in radialer Richtung, insbesondere in Richtung eines Messrohrmittelpunktes abnehmen.

Dies hat den Vorteil, dass sich eine Abrasionsrate anhand der zeitlichen elektrischen Widerstandsänderung ermitteln lässt. Bei intaktem Schichtsystem dominiert der Stromfluss durch die Schicht mit dem niedrigeren Widerstand. Wird diese Schicht abgestragen, so ist spiegelt sich das in den Werten der zu ermittelnden Größe wider. Unter Abrasionsrate ist eine materialspezifische Größe zu verstehen, die Auskunft über die Abtragung - ausdrückbar durch eine Länge, eine Fläche oder ein Volumen - pro Zeit gibt. Anhand der Abrasionsrate kann man den Zeitpunkt für einen Austausch von mediumsberührende Messgerätekomponenten, wie z.B. Liner oder Messelektroden bestimmen. Die unterschiedlichen elektrischen Widerstände lassen sich durch die Wahl von Materialien mit unterschiedlichen spez. Widerständen oder durch Schichten mit unterschiedliche Schichtdicken einstellen.

Eine Ausgestaltung sieht vor, dass die mindestens zwei Schichten jeweils eine Schichtdicke aufweisen,
wobei die mindestens zwei Schichten derart angeordnet sind, dass die jeweiligen Schichtdicken in radialer Richtung, insbesondere in Richtung eines Messrohrmittelpunktes zunehmen.

Somit lassen sich auch Schichtsysteme realisieren mit Schichten aus einem weichem und somit schnell abtragbaren Schichtmaterial - wie Polymere -, welche eine höhere elektrische Leitfähigkeit aufweisen als dünnere metallische Schichten.

Eine Ausgestaltung sieht vor, dass die mindestens zwei Schichten jeweils eine Härte aufweisen,
wobei die mindestens zwei Schichten derart angeordnet sind, dass die jeweiligen Härten in radialer Richtung, insbesondere in Richtung eines Messrohrmittelpunktes abnehmen.

Dies hat den Vorteil, dass sich härtenspezifische Abrasionsraten bestimmen lassen, anhand der Rückschlusse über Wartungzeiträume für andere Messgerätekomponenten aus Materialien mit ähnlicher Härte ziehbar sind. Der Begriff Härte steht für einen mechanischen Widerstand, den ein Werkstoff einer mechanischen Eindringung eines anderen Körpers - nämlich der die Abrasion verursachenden Stoffe im fließenden Medium - entgegensetzt. Je nach der Art der Einwirkung unterscheidet man verschiedene Arten von Härte. So ist Härte nicht nur der Widerstand gegen härtere Körper, sondern auch gegen weichere und gleich harte Körper. Härte ist auch ein Maß für das Verschleißverhalten von Materialien.

Eine Ausgestaltung sieht vor, dass das Schichtsystem zumindest eine elektrisch isolierende Schicht aufweist, welche zwei elektrisch leitfähige Schichten der mindestens zwei Schichten voneinander trennt.

Somit lassen sich Effekte aufgrund von inhomogener Abrasion vermeiden. Kommt es zur Trennung des elektrischen Kontaktes eines der Kontaktierungsmittel mit der ersten Schicht, so wird ausschließlich der elektrische Widerstand der zweiten Schicht gemessen. Dieser ist solange im Wesentlichen konstant bis die isolierende Schicht abgetragen wird. Erst wenn die zweite Schicht abgetragen wird - und die isolierende Schicht dementsprechend zumindest teilweise abgetragen ist - ändert sich der elektrische Widerstand des Schichtsystems wiederum. Dies lässt sich für die Separierung der unterschiedlichen Abrasionsraten der einzelnen Schichten zu Nutze machen.

Eine Ausgestaltung sieht vor, dass eine die innere Mantelfläche berührende Schicht des Schichtsystems zumindest teilweise ringförmig ausgebildet ist und/oder einen elektrischen Widerstand *R*₁ aufweist, mit
*R*₁ ≤ 10⁻⁶ Ω*m*, insbesondere *R*₁ ≤ 5 · 10⁻⁷ Ω*m* und bevorzugt *R*₁ ≤ 10⁻⁷ Ω*m*.

Dies hat den Vorteil, dass sich die Überwachungselektrode gleichzeitig zur Erdung des zu führenden Mediums eignet, was besonders für magnetisch-induktive Durchflussmessgeräte vorteilhaft ist, bei denen mangelnde Erdung zur Verschiebung des Messpunktes führen.

Eine Ausgestaltung sieht vor, dass die Abrasionsdetektionsvorrichtung dazu eingerichtet ist, die mindestens eine Größe in einem ersten Zeitintervall zu messen,
wobei die Abrasionsdetektionsvorrichtung dazu eingerichtet ist, das Schichtsystem zumindest in einem zweiten Zeitintervall mit einem Erdungspotential zu verbinden.

Eine Ausgestaltung sieht vor, dass die Abrasionsdetektionsvorrichtung eine Kontaktierungsanordnung zum elektrischen Kontaktieren der Überwachungselektrode aufweist, insbesondere umfassend ein erstes Kontaktierungsmittel und ein zweites Kontaktierungsmittel,
wobei die Abrasionsdetektionsvorrichtung dazu eingerichtet ist, eine Impedanz, insbesondere einene elektrischen Widerstand an der mindestens einen Überwachungselektrode zu messen und die mindestens eine Größe zumindest in Abhängigkeit der Impedanz, insbesondere von der zeitlichen Änderung der Impedanz zu bestimmen.

Eine Ausgestaltung sieht vor, dass die Kontaktierungsanordnung ein erstes Kontaktierungsmittel und ein zweites Kontaktierungsmittel aufweist,
wobei die Kontaktierungsanordnung ein drittes Kontaktierungsmittel und ein viertes Kontaktierungsmittel aufweist,
wobei das dritte Kontaktierungsmittel und das vierte Kontaktierungsmittel insbesondere in einer Umfangsrichtung des Messrohres zwischen dem ersten Kontaktierungsmittel und dem zweiten Kontaktierungsmittel angeordnet sind,
wobei die Abrasionsdetektionsvorrichtung dazu eingerichtet ist, zwischen dem ersten Kontaktierungsmittel und dem zweiten Kontaktierungsmittel einen elektrischen Strom fließen zu lassen,
wobei die Abrasionsdetektionsvorrichtung dazu eingerichtet ist, zwischen dem dritten Kontaktierungsmittel und dem vierten Kontaktierungsmittel eine elektrische Spannung zu messen,
wobei die Abrasionsdetektionsvorrichtung dazu eingerichtet ist, einen Flächenwiderstand zu bestimmen und die mindestens eine Größe zumindest in Abhängigkeit des Flächenwiderstandes, insbesondere von der zeitlichen Änderung des Flächenwiderstandes zu bestimmen.

Eine derartige Ausgestaltung hat den Vorteil, dass Kontaktwiderstände zwischen Kontaktierungsmittel und Schichtsystem reduziert werden und somit auch sehr geringe Änderungen des elektrischen Widerstandes des Schichtsystems detektierbar sind.

Eine Ausgestaltung sieht vor, dass eine Größe der mindestens einen Größe eine materialabhängige Abrasionsrate beschreibt und bevorzugt eine weitere Größe der mindestens einen Größe eine weitere materialabhängige Abrasionsrate beschreibt.

Sind erst materialabhängige oder härtenabhängige Abrasionsraten bekannt, so ist die Bestimmung der maximalen Laufzeit bis zum Austausch weiterer eingesetzter Komponenten im Messgerät oder in der verfahrenstechnischen Anlage möglich.

Ein erfindungsgemäße Verfahrenstechnische Anlage, umfassend:
- eine Rohrleitung,
- ein erfindungsgemäßes Messgerät,
   wobei das Messgerät mit der Rohrleitung verbunden ist,
   wobei die Überwachungselektrode ein Elektrodenmaterial und/oder eine an der inneren Mantelfläche angeordnete Beschichtung ein Beschichtungsmaterial aufweist,
   wobei eine Größe der mindestens einen Größe spezifisch für das Elektrodenmaterial und/oder das Beschichtungsmaterial ist,
- eine Anlagenkomponente, welche zumindest in einem mediumsberührenden Abschnitt ebenfalls das Elektrodenmaterial und/oder das Beschichtungsmaterial aufweist,
- eine Überwachungsvorrichtung,
   wobei die Überwachungsvorrichtung dazu eingerichtet ist, zumindest in Abhängigkeit von der Größe und bevorzugt eines der Anlagenkomponente zugeordnetem Schwellwertes eine Warnung für die Anlagenkomponente auszugeben und/oder eine verbleibende Einsatzzeit bis zu einer Wartungsmaßnahme der Anlagenkomponente zu bestimmen.

Ein erfindungsgemäßes Verfahren zum Bestimmen einer Abrasion einer mediumsberührenden elektrisch isolierenden Beschichtung eines Messrohres eines erfindungsgemäßen Messgerätesumfasst die Verfahrensschritte:
- Messen eines Flächenwiderstandes an einer insbesondere mediumsberührenden Überwachungselektrode,
   wobei die Überwachungselektrode als ein Schichtsystem ausgebildet ist;
- Ermitteln einer von einer Schichtdicke des Schichtsystems abhängigen Prüfgröße mittels des gemessenen Flächenwiderstandes,
- Bestimmen ob eine Abrasion vorliegt anhand der Prüfgröße.

Das erfindungsgemäße eignet sich für Dünnfilmelektroden, deren elektrischer Widerstand von der Schichtdicke abhängt. Ändert sich die Schichtdicke bereits minimal, so wirkt sich das auch auf den gemessenen Widerstand aus. Anhand der zeitlichen Änderung des Widerstandes lässt sich eine Abrasionsrate ableiten.

Die Erfindung wird anhand der nachfolgenden Figuren näher erläutert. Es zeigt:
Fig. 1: einen Längsschnitt eines erfindungsgemäßen Messgerätes;
Fig. 2: eine perspektivische Ansicht auf eine teilweise geschnittene Ausgestaltung des erfindungsgemäßen Messgerätes;
Fig. 3: einen Ausschnitt eines Längsschnittes einer Ausgestaltung des erfindungsgemäßen Messgerätes;
Fig. 4: einen Ausschnitt eines Längsschnittes einer weiteren Ausgestaltung des erfindungsgemäßen Messgerätes;
Fig. 5: einen Ausschnitt eines Längsschnittes einer weiteren Ausgestaltung des erfindungsgemäßen Messgerätes;
Fig. 6: einen Ausschnitt eines Längsschnittes einer weiteren Ausgestaltung des erfindungsgemäßen Messgerätes;
Fig. 7: einen Ausschnitt eines Längsschnittes einer weiteren Ausgestaltung des erfindungsgemäßen Messgerätes;
Fig. 8: einen Ausschnitt eines Längsschnittes einer weiteren Ausgestaltung des erfindungsgemäßen Messgerätes;
Fig. 9: einen Längsschnitt eines magnetisch-induktiven Durchflussmessgerätes; und
Fig. 10: eine Ansicht auf einen Teil einer verfahrenstechnischen Anlage.

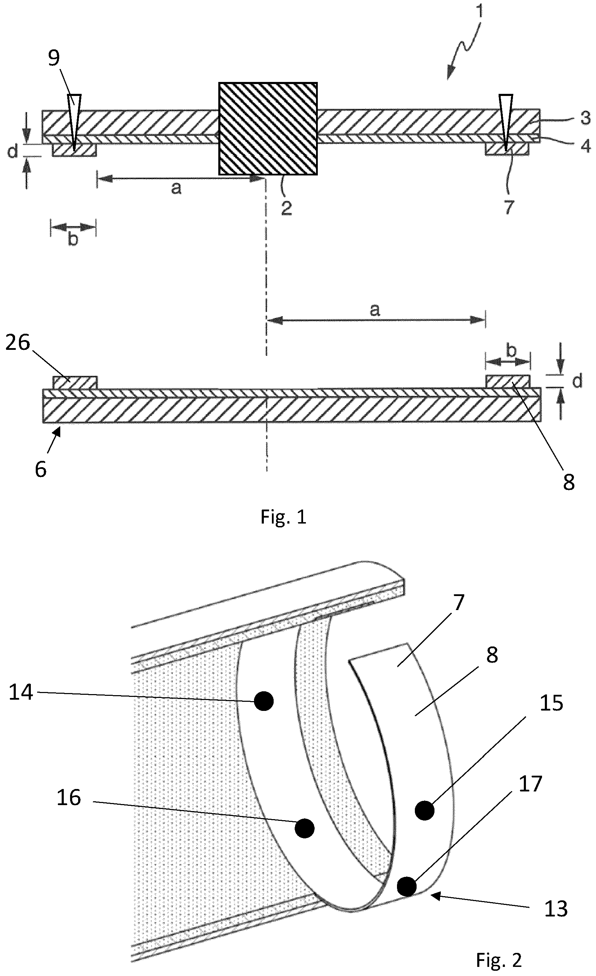

Die Fig. 1 zeigt einen Längsschnitt eines erfindungsgemäßen Messgerätes 1. Das abgebildete Messgerät 1 umfasst ein Messrohr 6 zum Führen eines fließfähigen Mediums. Das Messrohr 6 besteht aus einem metallischen Trägerrohr 3 und einem Liner 4 aus einem elektrisch isolierenden Material, wie z.B. Kunststoff. Der Liner 4 dient dazu das Trägerrohr 3 gegen das Medium zu isolieren. Durch den auf eine Innenfläche des Trägerrohres 3 applizierten Liner 4 ist die innere Mantelfläche 20 des Trägerrohres 3 zumindest abschnittsweise elektrisch isolierend ausgebildet. Desweiteren weist das Messgerät 1 zwei Überwachungselektroden 7, 26 auf, die sich eingangs- und ausgangsseitig ringförmig auf dem elektrisch isolierenden Abschnitt der inneren Mantelfläche 20 mediumsberührend erstrecken. Eine Messvorrichtung 2 zum Ermitteln einer Prozesseigenschaft des zu führenden Mediums ist Teil des Messgerätes 1. Eine Abrasionsdetektionsvorrichtung 9 ist dazu eingerichtet, an einer der zwei Überwachungselektrode 7,26 mindestens eine Größe zu ermitteln, welche mit einer Abrasion der Überwachungselektrode 7 korrespondiert. Alternativ kann die Abrasionsdetektionsvorrichtung 9 mit beiden Überwachungselektroden 7, 26 verbunden sein, wobei einer der beiden Werte der ermittelten Größe als Referenzwert dienen kann. Die Abrasionsdetektionsvorrichtung 9 ist dazu eingerichtet, einen Flächenwiderstand der Überwachungselektrode 7 zu bestimmen und die mindestens eine Größe zumindest in Abhängigkeit des Flächenwiderstandes, insbesondere von der zeitlichen Änderung des Flächenwiderstandes zu bestimmen. Das metallische Trägerrohr 3 ist gegenüber der Aberasionsdetektionsvorrichtung 9 elektrisch isoliert. Bei der ermittelten Größe handelt es sich um eine materialabhängige Abrasionsrate, die für das spezifische Material der zwei Überwachungselektroden 7, 26 steht. Die zwei Überwachungselektroden 7 sind jeweils als ein selektiv appliziertes leitfähiges Schichtsystem 8 ausgebildet, wobei das Schichtsystem 8 jeweils mindestens eine leitfähige Polymerschicht und/oder mindestens eine Metallschicht und/oder mindestens eine dotierte Halbleiterschicht umfasst. Zudem weist das Schichtsystem 8 eine Breite b und eine Dicke Schichtsystemdicke *d* auf, die beide neben dem materialabhängigen spezifischen Widerstand maßgeblich für die Größe des Flächenwiderstandes des Schichtsystemes 8 sind. Die Abrasionsdetektionsvorrichtung 9 kann ebenfalls dazu eingerichtet sein, die mindestens eine Größe in einem ersten Zeitintervall zu messen und in einem zweiten Zeitintervall mit einem Erdungspotential zu verbinden. Somit dienen die Überwachungselektrode 7, 26 zusätzlich zum Erkennen einer Abrasion durch das Medium ebenfalls zum Verbinden des fließfähigen Mediums mit einem kontrollierten Potential.

Die Fig. 2 zeigt eine perspektivische Ansicht auf eine teilweise geschnittene Ausgestaltung des erfindungsgemäßen Messgerätes 1. Die abgebildete Überwachungselektrode 7 ist ringförmig ausgebildet und besteht aus einem Schichtsystem 8 mit einer leitfähigen Schicht 11. Der Ring kann geschlossen oder offen ausgebildet sein. Die Kontaktierungsanordnung 13 weist ein erstes Kontaktierungsmittel 14, ein zweites Kontaktierungsmittel 15, ein drittes Kontaktierungsmittel 16 und ein viertes Kontaktierungsmittel 17 auf. Dabei ist das dritte Kontaktierungsmittel 16 und das vierte Kontaktierungsmittel 17 in einer Umfangsrichtung des Messrohres 6 zwischen dem ersten Kontaktierungsmittel 14 und dem zweiten Kontaktierungsmittel 15 angeordnet. Die Kontaktierungsmittel 14, 15, 16, 17 sind gleichmäßig um den Umfang des Messrohres verteilt. Die benachbarten Kontaktierungsmittel weisen jeweils einen im Wesentlichen gleichen Abstand zueinander auf, wobei der Abstand jeweils größer ist als die Dicke des Schichtsystems 8. Die Abrasionsdetektionsvorrichtung 9 ist dazu eingerichtet, zwischen dem ersten Kontaktierungsmittel 14 und dem zweiten Kontaktierungsmittel 15 einen elektrischen Strom fließen zu lassen und zwischen dem dritten Kontaktierungsmittel 16 und dem vierten Kontaktierungsmittel 17 eine elektrische Spannung zu messen. Abhängig von der Größe des elektrischen Stromes und der gemessenen Spannung ergibt sich ein Flächenwiderstand für die Überwachungselektrode 7. Die mindestens eine Größe lässt sich zumindest in Abhängigkeit des Flächenwiderstandes, insbesondere von der zeitlichen Änderung des Flächenwiderstandes bestimmen.

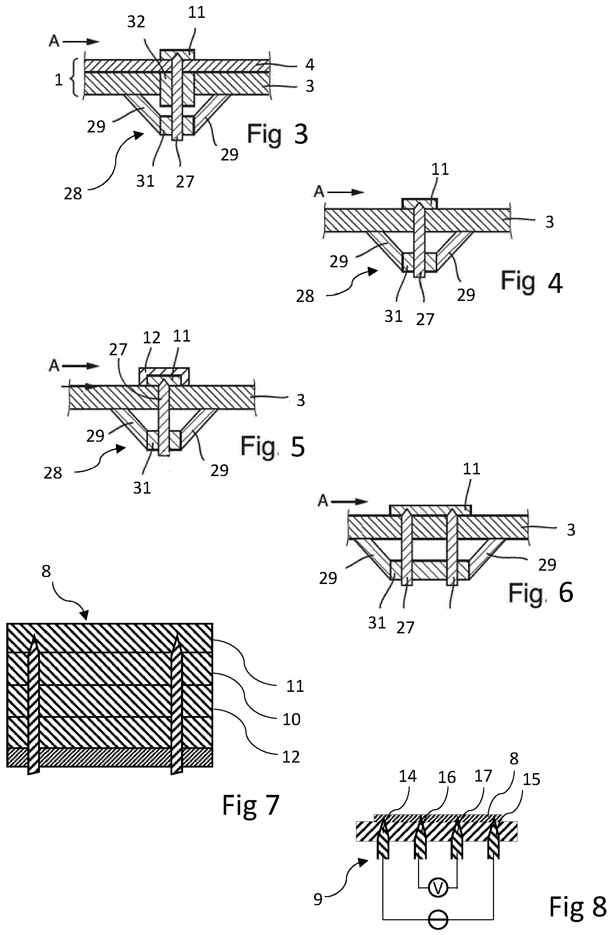

Die Fig. 3 zeigt einen Ausschnitt eines Längsschnittes einer Ausgestaltung der Abrasionsdetektionsvorrichtung 9 des erfindungsgemäßen Messgerätes. Der Liner 4 kann in dieser Variante eine Größe von weniger als 2,5 mm, vorzugsweise weniger als 1,5 mm aufweisen. So kann z.B. auch einen Liner als beschichtetes vergleichsweise dünnes Material in das Trägerrohr 3 eingebracht werden. Alternativ kann der Liner auch eine Lackschicht oder als eine Plasmabeschichtung ausgebildet sein. Besonders vorteilhaft kann die Linerdicke des Liners 6 von 50 µm bis 1,5 mm, insbesondere zwischen 200 µm bis 1,3 mm betragen. Auf der mediumszugewandten Seite weist das Messrohr 2 eine elektrisch leitfähige Schicht 10 auf. Vorzugsweise kann es sich um eine metallische Beschichtung handeln. Die elektrisch leitfähige Schicht 11 kann vorzugsweise als elektrisch-leitfähiger Lack, als elektrisch-leitfähige Pulverbeschichtung und/oder als elektrisch leitfähige Plasmabeschichtung aufgetragen sein. Bevorzugte Schichtdicken für die elektrisch leitfähige Schicht liegen zwischen 40 µm und 1 mm, vorzugsweise zwischen 50 µm und 800 µm. Diese Schichtdicken gewährleisten einerseits dass auch bei mechanischer Einwirkung die Schicht hinreichend stabil ist und zugleich eine Kontaktierungsmittel der Messrohrseite her kontaktierbar ist. Das Kontaktierungsmittel ist in Fig. 3 als spitz-zulaufende Stiftelektrode 27 dargestellt. Selbstverständlich sind auch andere Elektrodenformen im Rahmen der vorliegenden Erfindung realisierbar, wobei diese Elektrodenform sich zur Kontaktierung mit der metallischen Beschichtung als besonders geeignet erwiesen hat. Bei Kunststoff-Messrohren kann man alternativ auch eine Elektrodenform wie in der WO 2009/071615 A1 verwenden, welche keine zusätzliche Verankerungsvorrichtung benötigt. Fertigungstechnisch kann die Stiftelektrode 27 durch eine Bohrung im Messrohr 1 oder auch lediglich nur im Trägerrohr 3 bis zur Kontaktierung mit der elektrisch leitfähigen Schicht 11 von außen, also jenseits des Lumens des Messrohres 1, eingeschoben werden. Es ist auch möglich und einfach realisierbar die Stiftelektrode 27 zunächst zu positionieren und anschließend die elektrisch-leitfähige Schicht 11 aufzubringen. In der Bohrung des Messrohres 1 oder des Stützrohres 3 des Messrohres 1 ist eine elektrisch-isolierende Innenauskleidung 32 vorgesehen, welche eine Kontaktierung zwischen dem metallischen Trägerrohr 3 und der Stiftelektrode 27 vorteilhaft verhindert. Die elektrisch-leitfähige Schicht 11 kann in jeder Art von Messrohr eingesetzt werden, ist allerdings besonders vorteilhaft bei Messrohren mit geringem Innendurchmesser (DN100 oder geringer) und in Messrohren mit einem im Bereich des Magnetsystems verringerten und/oder veränderten Querschnitt, wie sie z.B. in der WO 2016/102168 A1 beschrieben wird. Auf der mediumsabgewandten Seite des Messrohres 1 ist ein Verankerungssystem 28 für die Stiftelektrode 27 vorgesehen. Dieses umfasst zwei schräg von der Außenwand des Messrohres 1 hervorstehende und aufeinander zulaufende Arme 29 und eine Plattform 31, welche radial beabstandet zur Außenwand des Messrohres dient und welche eine Bohrung zur Durchführung der Stiftelektrode 27 aufweist. Diese Form des Verankerungssystems 28 kann zudem als Zentrierhilfe und als Anschlag bei der Bereitstellung der Bohrung für die Elektrode im Trägertrohr 3 genutzt werden, so dass ein Bohrer geführt wird und in definierter Höhe die Bohrung setzt. Weiterhin dient das Verankerungssystem 28 der Verdrehsicherung der Stiftelektrode 27. Zwischen der elektrisch-leitfähigen Schicht 11 und dem Messrohr 1 können weitere Anbindungsschichten vorgesehen sein. Allerdings und vorteilhaft kann die elektrisch-leitfähige Schicht 11 auch unmittelbar auf die Innenseite des Messrohres 1, insbesondere auf die Oberfläche des Liners 4, aufgebracht sein. Die elektrisch-leitfähige Schicht 11 ist ortsselektiv. Das Material der elektrisch leitfähigen Schicht 11 kann vorzugsweise Stahl, aber auch anderes korrosionsresistentes Metall sein. Besonders bevorzugt kann Edelstahl der Klasse 1.4435 genutzt werden, welches für Trinkwasseranwendungen zugelassen ist. Die Arme 29 des Verankerungssystems 28 können mit dem Trägerrohr 3 verschweißt sein.

Die Fig. 4 zeigt einen Ausschnitt eines Längsschnittes einer weiteren Ausgestaltung der Abrasionsdetektionsvorrichtung des erfindungsgemäßen Messgerätes. Fig. 4 stellt ein abgewandeltes Ausführungsbeispiel für ein Trägerrohr 3 aus Kunststoff dar. Dieses benötigt daher keinen Liner und keine elektrisch-isolierende Bohrungs-Auskleidung. Die elektrisch leitfähige Schicht 11, die Stiftelektrode 27 und das Verankerungssystem 28 können analog zu Fig. 3 ausgebildet sein.

Die Fig. 5 zeigt einen Ausschnitt eines Längsschnittes einer weiteren Ausgestaltung der Abrasionsdetektionsvorrichtung des erfindungsgemäßen Messgerätes. Die Elektrodenvariante weist eine erste leitfähige Schicht 11 und eine zweite leitfähige Schicht 12 auf, welche die erste leitfähige Schicht 12, vorzugsweise vollständig, zum Medium hin bedeckt. Das Material der ersten leitfähigen Schicht 11 unterscheidet sich hinsichtlich ihrer Leitfähigkeit vom Material der zweiten Schicht 12. Die zweite Schicht 19 kann z.B. aus einem korrosionsbeständigerem Material als die erste Schicht 11 bestehen. Beispielsweise kann als Material der zweiten Schicht 12 Stahl, insbesondere Edelstahl, beispielsweise die Werkstoffklasse 1.4435 für den Trinkwasserbereich, genutzt werden und als Material der ersten Schicht 11 Kupfer, ein leitfähiger Kunststoff oder ein leitfähiger Halbleiter. Auch hier kann der Abtrag der zweiten Schicht 12 überwacht werden, z.B. durch Änderung eines Widerstandswertes, und eine Anzeige auf baldigen Ausfall erfolgen. Trotzdem bleibt auch hier die Messfunktion der Elektrode aufgrund des Vorhandenseins der ersten Schicht 11 intakt. Ortsselektive Direktbeschichtungen können z.B. in einem Plasma-Beschichtungsverfahren aufgebracht werden und sind u.a. bereits durch die Firma ecoCOAT GmbH bekannt. Durch eine derartig aufgebrachte Schicht kann eine Elektrodenoberfläche geschaffen werden, welche nur in vernachlässigbar-geringem Maße in das Lumen eines Rohres, insbesondere eines Messrohres, eines magnetisch-induktiven Durchflussmessgerätes hineinragt. Dadurch werden Verwirbelungen oder ähnliches auf der Elektrodenoberfläche verringert oder sogar gänzlich vermieden. Zudem kann eine geringe Linerdicke kann Messrohren bei metallischen Stützrohren gewählt werden, da die Elektrodenköpfe bislang zur Vermeidung von Verwirbelungen teilweise in Linermaterial eingedrückt wurden, was eine gewisse Linerdicke voraussetzt, welche nunmehr nicht mehr notwendig ist. Die Stiftelektrode 27 und das Verankerungssystem 28 können analog zu Fig. 3 ausgebildet sein.

Die Fig. 6 zeigt einen Ausschnitt eines Längsschnittes einer weiteren Ausgestaltung der Abrasionsdetektionsvorrichtung des erfindungsgemäßen Messgerätes. Zwei Stiftelektroden 27 und 33 sind in Strömungsrichtung A hintereinander in der elektrisch-leitfähigen Schicht 11 und im Messrohr angeordnet sind. Wird der vordere bzw. anströmseitige Bereich der Schicht 11 abgetragen, so kann dies durch Vergleichsmessung der Spannungen und/oder Widerstände der jeweiligen Elektroden 27 und 33 relativ zu einer Referenzelektrode erkannt und ein baldiger Ausfall signalisiert werden. Dabei kann eine Reparatur relativ unkompliziert erfolgen, indem die Innenseite des Trägerrohrs 3 einfach erneut ortsselektiv beschichtet wird.

Die Fig. 7 zeigt einen Ausschnitt eines Längsschnittes einer weiteren Ausgestaltung der Abrasionsdetektionsvorrichtung 9 des erfindungsgemäßen Messgerätes. Das Schichtsystem 8 besteht aus vier einzelnen Schichten mit jeweils einem unterschiedlichen elektrischen Widerstand, wobei die elektrischen Widerstände derart gewählt sind, dass sie in radialer Richtung, insbesondere in Richtung eines Messrohrmittelpunktes abnehmen. Alternativ können einzelnen Schichten jeweils unterschiedliche Härten aufweisen, wobei die Härten in radialer Richtung, insbesondere in Richtung eines Messrohrmittelpunktes abnehmen. Alternativ können die Schichten jeweils unterschiedliche Schichtdicken aufweisen, wobei die Schichtdicken derart gewählt sind, dass sie in radialer Richtung, insbesondere in Richtung eines Messrohrmittelpunktes zunehmen. Zusätzlich zu den elektrisch isolierenden Schichten, weist das Schichtsystem 8 mindestens eine elektrisch isolierende Schicht 10 aus, welche zwei elektrisch leitfähige Schichten 11, 12 der voneinander trennt.

Die Fig. 8 zeigt einen Ausschnitt eines Längsschnittes einer weiteren Ausgestaltung der Abrasionsdetektionsvorrichtung 9 des erfindungsgemäßen Messgerätes. Alternative zu der Ausgestaltung nach Fig. 2 mit am Trägerrohrumfang verteilten Kontaktierungsmitteln. Die Kontaktierungsmittel 14, 15, 16, 17 sind gleichmäßig in Strömungsrichtung verteilt. Das Schichtsystem ist nicht notwendigerweise als Ringstreifen ausgebildet, sondern kann als Die benachbarten Kontaktierungsmittel weisen jeweils einen im Wesentlichen gleichen Abstand zueinander auf, wobei der Abstand jeweils größer ist als die Dicke des Schichtsystems 8. Die Abrasionsdetektionsvorrichtung 9 ist dazu eingerichtet, zwischen dem ersten Kontaktierungsmittel 14 und dem zweiten Kontaktierungsmittel 15 einen elektrischen Strom fließen zu lassen und zwischen dem dritten Kontaktierungsmittel 16 und dem vierten Kontaktierungsmittel 17 eine elektrische Spannung zu messen. Abhängig von der Größe des elektrischen Stromes und der gemessenen Spannung ergibt sich ein Flächenwiderstand für das Schichtsystem. Die mindestens eine Größe lässt sich zumindest in Abhängigkeit des Flächenwiderstandes, insbesondere von der zeitlichen Änderung des Flächenwiderstandes bestimmen.

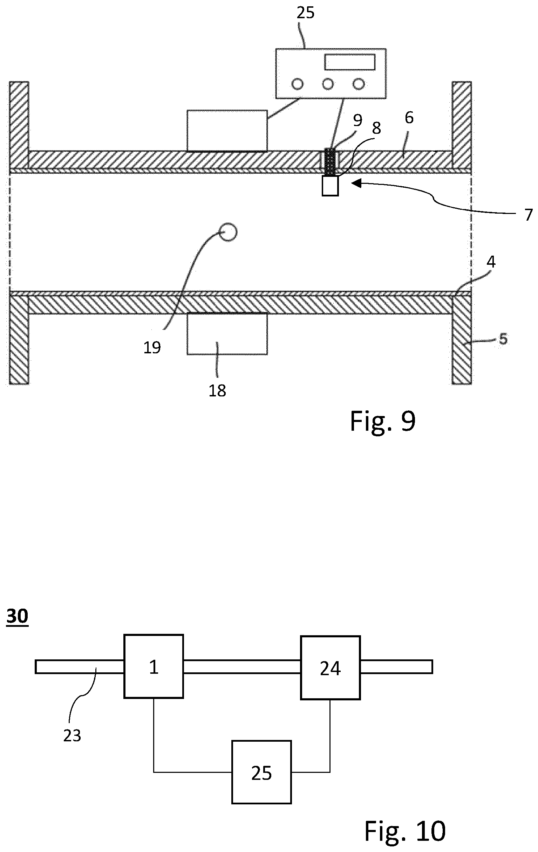

Die Fig. 9 zeigt einen Längsschnitt eines erfindungsgemäßen magnetisch-induktiven Durchflussmessgerätes, welches über Flansche 5 mit einer Prozessleitung verbindbar ist. Die Messvorrichtung des magnetisch-induktiven Durchflussmessgerätes weist eine Magnetfelderzeugungsvorrichtung 18 zum Erzeugen eines das Messrohr 6 durchdringenden Magnetfeldes auf, die an einer äußeren Mantelfläche des Messrohres 6 angeordnet ist. Die Magnetfelderzeugungsvorrichtung 18 kann bspw. mindestens eine Sattelspule oder mindestens eine Spule mit Polschuh umfassen. Zudem weist die Messvorrichtung eine Elektrodenanordnung 19 zum Abgreifen einer im Medium induktiv erzeugten strömungsgeschwindigkeitsabhängigen Messgröße auf. Diese besteht in der Regel aus mindestens zwei diametral angeordneten Messelektroden. Die Elektrodenanordnung 19 ist in einem Messabschnitt angeordnet und eine Überwachungselektrode 7 in Fließrichtung versetzt zum Messabschnitt auf dem Liner 4 als Schichtsystem 8 aufgebracht. Das Schichtsystem 8 ist über eine Abrasionsdetektionsvorrichtung 9 mit einer Messschaltung verbunden, die dazu eingerichtet ist das erfindungsgemäße Verfahren auszuführen. Die Überwachungselektrode 7, die Abrasionsdetektiosnvorrichtung 9 und die Messchaltung bilden zusammengenommen die Überwachungsvorrichtung 25.

Die Fig. 10 zeigt eine Ansicht auf einen Teil einer verfahrenstechnischen Anlage 30, die eine Rohrleitung 23, ein erfindungsgemäßes Messgerät 1, eine Anlagenkomponente 24 und eine Überwachungsvorrichtung 25 umfasst. Das Messgerät 1 ist mit der Rohrleitung 23 verbunden und weist eine Überwachungselektrode auf, die ein Elektrodenmaterial und/oder ein Beschichtungsmaterial aufweist, welches auch die Anlagenkomponente 24 aufweist. Die Überwachungsvorrichtung 25 ist dazu eingerichtet, zumindest in Abhängigkeit von mindestens einer Größe, die spezifisch für das Elektrodenmaterial und/oder das Beschichtungsmaterial ist, und bevorzugt eines der Anlagenkomponente 24 zugeordnetem Schwellwertes eine Warnung für die Anlagenkomponente 24 auszugeben und/oder eine verbleibende Einsatzzeit bis zu einer Wartungsmaßnahme der Anlagenkomponente 24 zu bestimmen.

### Bezugszeichenliste

Messgerät 1
Messvorrichtung 2
Trägerrohr 3
Liner 4
Flansch 5
Messrohr 6
Überwachungselektrode 7
Schichtsystem 8
Abrasionsdetektionsvorrichtung 9
isolierende Schicht 10
erste Schicht 11
zweite Schicht 12
Kontaktierungsanordnung 13
erstes Kontaktierungsmittel 14
zweites Kontaktierungsmittel 15
drittes Kontaktierungsmittel 16
viertes Kontaktierungsmittel 17
Magnetfelderzeugungsvorrichtung 18
Elektrodenanordnung 19
innere Mantelfläche 20
äußere Mantelfläche 21
verfahrenstechnische Anlage 22
Rohrleitung 23
Anlagenkomponente 24
Überwachungsvorrichtung 25
Überwachungselektrode 26
Stiftelektrode 27
Verankerungssystem 28
Arm 29
verfahrenstechnische Anlage 30
Plattform 31
Innenauskleidung 32
Stiftelektrode 33

## Patentansprüche

1. Messgerät (1), umfassend:
- ein Messrohr (6) zum Führen eines fließfähigen Mediums,
wobei das Messrohr (6) eine innere Mantelfläche (20) aufweist,
wobei die innere Mantelfläche (20) zumindest abschnittsweise elektrisch isolierend ausgebildet ist,
- mindestens eine Überwachungselektrode (7),
wobei die mindestens eine Überwachungselektrode (7) an dem elektrisch isolierenden Abschnitt der inneren Mantelfläche (20) mediumsberührend angeordnet ist,
- eine Messvorrichtung (2) zum Ermitteln einer Prozesseigenschaft des Mediums;
- eine Abrasionsdetektionsvorrichtung (9), welche dazu eingerichtet ist, an der mindestens einen Überwachungselektrode (7) mindestens eine Größe zu ermitteln, welche mit einer Abrasion der Überwachungselektrode (7) korrespondiert,
wobei die mindestens eine Überwachungselektrode (7) als ein selektiv appliziertes leitfähiges Schichtsystem (8) ausgebildet ist;
**dadurch gekennzeichnet,**
**dass** das Schichtsystem (8) mindestens zwei, jeweils unterschiedliche Materialien aufweisende elektrisch leitfähige Schichten (11, 12) umfasst.

2. Messgerät (1) nach dem vorherigen Anspruch,
wobei das Schichtsystem (8) mindestens eine leitfähige Polymerschicht und/oder mindestens eine Metallschicht und/oder mindestens eine dotierte Halbleiterschicht umfasst.

3. Messgerät (1) nach Anspruch 1 oder 2,
wobei die mindestens zwei Schichten (11, 12) jeweils einen elektrischen Widerstand aufweisen,
wobei die mindestens zwei Schichten (11, 12) derart angeordnet sind, dass die jeweiligen Widerstände in radialer Richtung, insbesondere in Richtung eines Messrohrmittelpunktes abnehmen.

4. Messgerät (1) nach einem der vorhergehenden Ansprüchen,
wobei die mindestens zwei Schichten (11, 12) jeweils eine Schichtdicke aufweisen,
wobei die mindestens zwei Schichten (11, 12) derart angeordnet sind, dass die jeweiligen Schichtdicken in radialer Richtung, insbesondere in Richtung eines Messrohrmittelpunktes zunehmen.

5. Messgerät (1) nach mindestens einem der vorhergehenden Ansprüchen,
wobei die mindestens zwei Schichten (11, 12) jeweils eine Härte aufweisen,
wobei die mindestens zwei Schichten (11, 12) derart angeordnet sind, dass die jeweiligen Härten in radialer Richtung, insbesondere in Richtung eines Messrohrmittelpunktes abnehmen.

6. Messgerät (1) nach mindestens einem der vorhergehenden Ansprüchen,
wobei das Schichtsystem (8) zumindest eine elektrisch isolierende Schicht (10) aufweist, welche zwei elektrisch leitfähige Schichten (11, 12) der mindestens zwei Schichten (11, 12) voneinander trennt.

7. Messgerät (1) nach mindestens einem der vorherigen Ansprüche,
wobei eine die innere Mantelfläche (20) berührende Schicht (11) des Schichtsystems (8) zumindest teilweise ringförmig ausgebildet ist und/oder einen elektrischen Widerstand *R*₁ aufweist, mit *R*₁ ≤ 10⁻⁶ Ω*m*, insbesondere *R*₁ ≤ 5 · 10⁻⁷ Ω*m* und bevorzugt *R*₁ ≤ 10⁻⁷ Ω*m*.

8. Messgerät (1) nach mindestens einem der vorherigen Ansprüche,
wobei die Abrasionsdetektionsvorrichtung (9) dazu eingerichtet ist, die mindestens eine Größe in einem ersten Zeitintervall zu messen,
wobei die Abrasionsdetektionsvorrichtung (9) dazu eingerichtet ist, das Schichtsystem (8) zumindest in einem zweiten Zeitintervall mit einem Erdungspotential zu verbinden.

9. Messgerät (1) nach einem der vorherigen Ansprüche, umfassend:
wobei die Abrasionsdetektionsvorrichtung (9) eine Kontaktierungsanordnung (13) zum elektrischen Kontaktieren der Überwachungselektrode (7) aufweist, insbesondere umfassend ein erstes Kontaktierungsmittel (14) und ein zweites Kontaktierungsmittel (15),
wobei die Abrasionsdetektionsvorrichtung (9) dazu eingerichtet ist, eine Impedanz an der mindestens einen Überwachungselektrode (7) zu messen und die mindestens eine Größe zumindest in Abhängigkeit der Impedanz, insbesondere von der zeitlichen Änderung der Impedanz zu bestimmen.

10. Messgerät (1) nach mindestens einem der Ansprüche 1 bis 8,
wobei die Kontaktierungsanordnung (13) ein erstes Kontaktierungsmittel (14) und ein zweites Kontaktierungsmittel (15) aufweist,
wobei die Kontaktierungsanordnung (13) ein drittes Kontaktierungsmittel (16) und ein viertes Kontaktierungsmittel (17) aufweist,
wobei das dritte Kontaktierungsmittel (16) und das vierte Kontaktierungsmittel (17) insbesondere in einer Umfangsrichtung des Messrohres (6) zwischen dem ersten Kontaktierungsmittel (14) und dem zweiten Kontaktierungsmittel (15) angeordnet sind,
wobei die Abrasionsdetektionsvorrichtung (9) dazu eingerichtet ist, zwischen dem ersten Kontaktierungsmittel (14) und dem zweiten Kontaktierungsmittel (15) einen elektrischen Strom fließen zu lassen,
wobei die Abrasionsdetektionsvorrichtung (9) dazu eingerichtet ist, zwischen dem dritten Kontaktierungsmittel (16) und dem vierten Kontaktierungsmittel (17) eine elektrische Spannung zu messen,
wobei die Abrasionsdetektionsvorrichtung (9) dazu eingerichtet ist, einen Flächenwiderstand zu bestimmen und die mindestens eine Größe zumindest in Abhängigkeit des Flächenwiderstandes, insbesondere von der zeitlichen Änderung des Flächenwiderstandes zu bestimmen.

11. Messgerät (1) nach mindestens einem der vorhergehenden Ansprüchen,
wobei eine Größe der mindestens einen Größe eine materialabhängige Abrasionsrate beschreibt und bevorzugt eine weitere Größe der mindestens einen Größe eine weitere materialabhängige Abrasionsrate beschreibt.

12. Messgerät (1) nach mindestens einem der vorherigen Ansprüche,
wobei die Messvorrichtung eine Magnetfelderzeugungsvorrichtung (18) zum Erzeugen eines das Messrohr (6) durchdringenden Magnetfeldes umfasst,
wobei die Magnetfelderzeugungsvorrichtung (18) an einer äußeren Mantelfläche (21) des Messrohres (6) angeordnet ist,
wobei die Messvorrichtung eine Elektrodenanordnung (19) zum Abgreifen einer im Medium induktiv erzeugten strömungsgeschwindigkeitsabhängigen Messgröße umfasst,
wobei die Elektrodenanordnung (19) in einem Messabschnitt angeordnet ist,
wobei die mindestens eine Überwachungselektrode (7) im Messrohr (6) eingangs- und/oder ausgangsseitig und bevorzugt zum Messabschnitt beabstandet angeordnet ist.

13. Verfahrenstechnische Anlage (22), umfassend:
- eine Rohrleitung (23),
- ein Messgerät (1) nach einem der vorherigen Ansprüche,
wobei das Messgerät (1) mit der Rohrleitung (23) verbunden ist,
wobei die Überwachungselektrode (7) ein Elektrodenmaterial und/oder eine an der inneren Mantelfläche angeordnete Beschichtung ein Beschichtungsmaterial aufweist,
wobei eine Größe der mindestens einen Größe spezifisch für das Elektrodenmaterial und/oder das Beschichtungsmaterial ist,
- eine Anlagenkomponente (24), welche zumindest in einem mediumsberührenden Abschnitt ebenfalls das Elektrodenmaterial und/oder das Beschichtungsmaterial aufweist,
- eine Überwachungsvorrichtung (25),
wobei die Überwachungsvorrichtung (25) dazu eingerichtet ist, zumindest in Abhängigkeit von der Größe und bevorzugt eines der Anlagenkomponente (24) zugeordnetem Schwellwertes eine Warnung für die Anlagenkomponente (24) auszugeben und/oder eine verbleibende Einsatzzeit bis zu einer Wartungsmaßnahme der Anlagenkomponente (24) zu bestimmen.

14. Verfahren zum Bestimmen einer Abrasion einer mediumsberührenden elektrisch isolierenden Beschichtung eines Messrohres (6) eines Messgerätes (1) nach einem der Ansprüche 1 bis 12 umfassend die Verfahrensschritte:
- Messen eines Flächenwiderstandes an einer mediumsberührenden Überwachungselektrode (7),
wobei die Überwachungselektrode (7) als ein Schichtsystem (8) ausgebildet ist;
- Ermitteln einer von einer Schichtdicke des Schichtsystems (8) abhängigen Prüfgröße mittels des gemessenen Flächenwiderstandes,
- Bestimmen ob eine Abrasion vorliegt anhand der Prüfgröße.

## Claims

1. A measuring device (1), comprising:
- A measuring tube (6) for conducting a flowable medium,
wherein the measuring tube (6) has an inner lateral surface (20),
wherein the inner lateral surface (20) is designed to be electrically insulating at least in sections,
- at least one monitoring electrode (7),
wherein the at least one monitoring electrode (7) is arranged on the electrically insulating section of the inner lateral surface (20) in such a way that it is contact with the media,
- a measuring apparatus (2) for determining a process property of the medium;
- an abrasion detection device (9), which is configured to determine at least one variable on the at least one monitoring electrode (7), which corresponds to an abrasion of the monitoring electrode (7),
wherein the at least one monitoring electrode (7) is configured as a selectively applied conductive layer system (8);
**characterized in that**
the layer system (8) comprises at least two electrically conductive layers (11, 12) each having different materials.

2. The measuring device (1) as claimed in the preceding claim,
wherein the layer system (8) comprises at least one conductive polymer layer and/or at least one metal layer and/or at least one doped semiconductor layer.

3. The measuring device (1) as claimed in claim 1 or 2,
wherein the at least two layers (11, 12) each have an electrical resistance,
wherein the at least two layers (11, 12) are arranged in such a way that the respective resistance decreases in a radial direction, in particular in the direction of the center of the measuring tube.

4. The measuring device (1) as claimed in one of the preceding claims,
wherein the at least two layers (11, 12) each have a layer thickness,
wherein the at least two layers (11, 12) are arranged in such a way that the respective layer thickness increases in a radial direction, in particular in the direction of the center of the measuring tube.

5. The measuring device (1) as claimed in at least one of the preceding claims,
wherein the at least two layers (11, 12) each have a hardness,
wherein the at least two layers (11, 12) are arranged in such a way that the respective hardness decreases in a radial direction, in particular in the direction of the center of the measuring tube.

6. The measuring device (1) as claimed in at least one of the preceding claims,
wherein the layer system (8) has at least one electrically insulating layer (10), which separates two electrically conductive layers (11, 12) of the at least two layers (11, 12) from each other.

7. The measuring device (1) as claimed in at least one of the preceding claims,
wherein a layer (11) of the layer system (8) in contact with the inner lateral surface (20) is at least partially annular and/or has an electrical resistance *R*₁, where *R*₁ ≤ 10⁻⁶ Ωm, in particular *R*₁ ≤ 5 · 10⁻⁷ Ωm and preferably *R*₁ ≤ 10⁻⁷ Ωm.

8. The measuring device (1) as claimed in at least one of the preceding claims,
wherein the abrasion detection device (9) is configured to measure the at least one variable in a first time interval,
wherein the abrasion detection device (9) is configured to connect the layer system (8) with an earth potential at least in a second time interval.

9. The measuring device (1) as claimed in one of the preceding claims:
wherein the abrasion detection device (9) has a contacting arrangement (13) for electrically contacting the monitoring electrode (7), in particular comprising a first contacting medium (14) and a second contacting medium (15),
wherein the abrasion detection device (9) is configured to measure an impedance on the at least one monitoring electrode (7) and to determine the at least one variable at least as a function of the impedance, in particular as a function of how the impedance changes over time.

10. The measuring device (1) as claimed in at least one of claims 1 to 8,
wherein the contacting arrangement (13) has a first contacting medium (14) and a second contacting medium (15),
wherein the contacting arrangement (13) has a third contacting medium (16) and a fourth contacting medium (17),
wherein the third contacting medium (16) and the fourth contacting medium (17) are arranged between the first contacting medium (14) and the second contact medium (15), in particular in a circumferential direction of the measuring tube (6),
wherein the abrasion detection device (9) is configured to allow a electric current to flow between the first contacting medium (14) and the second contacting medium (15),
wherein the abrasion detection device (9) is configured to measure an electrical voltage between the third contacting medium (16) and the fourth contacting medium (17),
wherein the abrasion detection device (9) is configured to determine a sheet resistance and to determine the at least one variable at least as a function of the sheet resistance, in particular as a function of how the sheet resistance changes over time.

11. The measuring device (1) as claimed in at least one of the preceding claims,
wherein a variable of the at least one variable describes a material-dependent abrasion rate and preferably a further variable of the at least one variable describes a further material-dependent abrasion rate.

12. The measuring device (1) as claimed in at least one of the preceding claims,
wherein the measuring apparatus comprises a magnetic field generating device (18) for generating a magnetic field which penetrates the measuring tube (6),
wherein the magnetic field generating device (18) is arranged on an outer lateral surface (21) of the measuring tube (6),
wherein the measuring apparatus comprises an electrode arrangement (19) for measuring a flow velocity-dependent measured variable inductively generated in the medium,
wherein the electrode arrangement (19) is arranged in a measuring section,
wherein the at least one monitoring electrode (7) is arranged in the measuring tube (6) on the inlet side and/or on the outlet side and preferably at a distance from the measuring section.

13. A process plant (22), comprising:
- A pipeline (23),
- a measuring device (1) as claimed in one of the preceding claims,
wherein the measuring device (1) is connected to the pipeline (23),
wherein the monitoring electrode (7) has an electrode material and/or a coating arranged on the inner lateral surface has a coating material,
wherein a variable of the at least one variable is specific to the electrode material and/or the coating material,
- a plant component (24), which also has the electrode material and/or the coating material at least in a section in contact with the medium,
- a monitoring device (25),
wherein the monitoring device (25) is configured to issue a warning for the plant component (24), at least as a function of the variable and preferably a threshold value assigned to the plant component (24) and/or to determine a remaining operating time until a maintenance measure on the plant component (24).

14. A method for determining an abrasion of an electrically insulating coating of a measuring tube (6) of a measuring device (1) in contact with the medium as claimed in one of claims 1 to 12, comprising the process steps:
- Measuring a sheet resistance at a monitoring electrode (7) in contact with the medium,
wherein the monitoring electrode (7) is configured as a layer system (8);
- Determining a test variable dependent on a layer thickness of the layer system (8) by means of the measured sheet resistance,
- Determining whether abrasion is present based on the test variable.

## Revendications

1. Appareil de mesure (1) comprenant :
- un tube de mesure (6) destiné à guider un produit fluide,
le tube de mesure (6) présentant une surface d'enveloppe intérieure (20),
la surface d'enveloppe intérieure (20) étant conçue de manière à être électriquement isolante au moins par sections,
- au moins une électrode de surveillance (7),
l'au moins une électrode de surveillance (7) étant disposée sur la section électriquement isolante de la surface d'enveloppe intérieure (20) en contact avec le produit,
- un dispositif de mesure (2) destiné à déterminer une propriété de process du produit ;
- un dispositif de détection d'abrasion (9), lequel est conçu pour déterminer sur l'au moins une électrode de surveillance (7) au moins une grandeur qui correspond à une abrasion de l'électrode de surveillance (7), l'au moins une électrode de surveillance (7) étant conçue sous la forme d'un système de couches conductrices (8) appliqué de manière sélective ;
**caractérisé en ce que**
le système de couches (8) comprend au moins deux couches électriquement conductrices (11, 12) présentant chacune des matériaux différents.

2. Appareil de mesure (1) selon la revendication précédente,
pour lequel le système de couches (8) comprend au moins une couche polymère conductrice et/ou au moins une couche métallique et/ou au moins une couche semi-conductrice dopée.

3. Appareil de mesure (1) selon la revendication 1 ou 2,
pour lequel les au moins deux couches (11, 12) présentent chacune une résistance électrique,
pour lequel les au moins deux couches (11, 12) sont disposées de telle sorte que les résistances respectives diminuent dans la direction radiale, notamment en direction d'un point central du tube de mesure.

4. Appareil de mesure (1) selon l'une des revendications précédentes,
pour lequel les au moins deux couches (11, 12) présentent chacune une épaisseur de couche,
pour lequel les au moins deux couches (11, 12) sont disposées de telle sorte que les épaisseurs de couche respectives augmentent dans la direction radiale, notamment en direction d'un point central du tube de mesure.

5. Appareil de mesure (1) selon au moins l'une des revendications précédentes,
pour lequel les au moins deux couches (11, 12) présentent chacune une dureté,
pour lequel au moins deux couches (11, 12) sont disposées de telle sorte que les duretés respectives diminuent dans la direction radiale, notamment en direction d'un point central du tube de mesure.

6. Appareil de mesure (1) selon au moins l'une des revendications précédentes,
pour lequel le système de couches (8) présente au moins une couche électriquement isolante (10), laquelle sépare deux couches électriquement conductrices (11, 12) des au moins deux couches (11, 12).

7. Appareil de mesure (1) selon au moins l'une des revendications précédentes,
pour lequel une couche (11) du système de couches (8) en contact avec la surface d'enveloppe intérieure (20) est réalisée au moins partiellement en forme d'anneau et/ou présente une résistance électrique *R₁*, avec *R₁* ≤ *10⁻⁶ Ωm*, notamment *R*₁ ≤ *5 · 10⁻⁷ Ωm* et de préférence *R*₁ ≤ *10⁻⁷ Ωm.*

8. Appareil de mesure (1) selon au moins l'une des revendications précédentes,
pour lequel le dispositif de détection d'abrasion (9) est conçu pour mesurer l'au moins une grandeur dans un premier intervalle de temps,
pour lequel le dispositif de détection d'abrasion (9) est conçu pour relier le système de couches (8) à un potentiel de terre au moins dans un deuxième intervalle de temps.

9. Appareil de mesure (1) selon l'une des revendications précédentes,
pour lequel le dispositif de détection d'abrasion (9) comporte un dispositif de mise en contact (13) destiné à mettre en contact électrique l'électrode de surveillance (7), lequel dispositif comprenant notamment un premier moyen de mise en contact (14) et un deuxième moyen de mise en contact (15),
pour lequel le dispositif de détection d'abrasion (9) est conçu pour mesurer une impédance sur l'au moins une électrode de surveillance (7) et pour déterminer l'au moins une grandeur au moins en fonction de l'impédance, notamment de la variation de l'impédance dans le temps.

10. Appareil de mesure (1) selon au moins l'une des revendications 1 à 8,
pour lequel le dispositif de mise en contact (13) comprend un premier moyen de mise en contact (14) et un deuxième moyen de mise en contact (15),
pour lequel le dispositif de mise en contact (13) comprend un troisième moyen de mise en contact (16) et un quatrième moyen de mise en contact (17),
pour lequel le troisième moyen de mise en contact (16) et le quatrième moyen de mise en contact (17) sont disposés notamment dans une direction circonférentielle du tube de mesure (6) entre le premier moyen de mise en contact (14) et le deuxième moyen de mise en contact (15),
pour lequel le dispositif de détection d'abrasion (9) est conçu pour faire circuler un courant électrique entre le premier moyen de mise en contact (14) et le deuxième moyen de mise en contact (15),
pour lequel le dispositif de détection d'abrasion (9) est conçu pour mesurer une tension électrique entre le troisième moyen de mise en contact (16) et le quatrième moyen de mise en contact (17),
pour lequel le dispositif de détection d'abrasion (9) est conçu pour déterminer une résistance de surface et pour déterminer l'au moins une grandeur au moins en fonction de la résistance de surface, notamment de la variation dans le temps de la résistance de surface.

11. Appareil de mesure (1) selon au moins l'une des revendications précédentes,
pour lequel une grandeur de l'au moins une grandeur décrit un taux d'abrasion dépendant du matériau et, de préférence, une autre grandeur de l'au moins une grandeur décrit un autre taux d'abrasion dépendant du matériau.

12. Appareil de mesure (1) selon au moins l'une des revendications précédentes,
pour lequel le dispositif de mesure comprend un dispositif de génération de champ magnétique (18) destiné à générer un champ magnétique pénétrant dans le tube de mesure (6),
le dispositif de génération de champ magnétique (18) étant disposé sur une surface d'enveloppe extérieure (21) du tube de mesure (6),
le dispositif de mesure comprenant un agencement d'électrodes (19) destiné à prélever une grandeur de mesure dépendant de la vitesse d'écoulement et générée de manière inductive dans le produit,
l'agencement d'électrodes (19) étant disposé dans une section de mesure,
l'au moins une électrode de surveillance (7) étant disposée dans le tube de mesure (6) du côté de l'entrée et/ou de la sortie et de préférence à une certaine distance de la section de mesure.

13. Installation technologique (22) comprenant :
- une conduite (23),
- un appareil de mesure (1) selon l'une des revendications précédentes,
l'appareil de mesure (1) étant relié à la conduite (23),
l'électrode de surveillance (7) présentant un matériau d'électrode et/ou un matériau de revêtement d'un revêtement disposé sur la surface d'enveloppe intérieure,
une taille de l'au moins une taille étant spécifique au matériau d'électrode et/ou au matériau de revêtement,
- un composant d'installation (24), lequel présente également le matériau d'électrode et/ou le matériau de revêtement au moins dans une section en contact avec le produit,
- un dispositif de surveillance (25),
le dispositif de surveillance (25) étant conçu pour émettre un avertissement pour le composant d'installation (24) et/ou pour déterminer un temps d'utilisation restant jusqu'à une mesure de maintenance du composant d'installation (24), au moins en fonction de la taille et de préférence d'une valeur seuil associée au composant d'installation (24).

14. Procédé destiné à la détermination d'une abrasion d'un revêtement - électriquement isolant et en contact avec le produit - d'un tube de mesure (6) d'un appareil de mesure (1) selon l'une des revendications 1 à 12, lequel procédé comprend les étapes suivantes :
- Mesure d'une résistance de surface sur une électrode de surveillance (7) en contact avec le produit,
l'électrode de surveillance (7) étant conçue en tant que système de couches (8) ;
- Détermination d'une grandeur de contrôle dépendant d'une épaisseur de couche du système de couches (8) au moyen de la résistance de surface mesurée,
- Détermination de la présence d'une abrasion à l'aide de la grandeur de contrôle.
